# EUROPEAN PATENT APPLICATION

(11) **EP 1 220 551 A1**
(43) Date of publication of application: **03.07.2002**
(21) Application number: 00403707.3
(22) Date of filing: 28.12.2000
(51) Int. Cl.: H04Q 7/22, H04M 3/42

(54) **Provision of localized multimedia services**

(71) Applicant: ALCATEL, 75008 Paris (FR)
(72) Inventor: Bos, Lieve Maria Marcella Rosemarijn, 2340 Vlimmeren (BE); Vosters, Jean, 9140 Temse (BE)
(74) Representative: Plas, Axel

(57) **Abstract**

A method and related devices is described to enable provision of a localized multimedia service (S1) to a terminal (FT1) in a multimedia telecommunication network. The service is provided by a server (SAS) and the localized multimedia service (S1) is related to a geographical position (GP1) of the terminal (FT1). The method comprises determining the geographical position (GP1) of the terminal (FT1) and generating and transmitting by the terminal (FT1) to the server (SAS) a service request (REQ(S1,FT1)). The service request REQ(S1,FT1) comprises the terminal reference (ET1) and the service reference (S1). In the event when the terminal (FT1) is a fixed terminal, the method further comprises: storing position information (GP1) regarding the geographical position (GP1) into a geographical position database (GPD); and retrieving the position information (GP1) from the geographical position database (GPD); and comprising the position information (GP1) into the service request (REQ(S1, FT1, GP1)) in order to thereby enable the server (SAS), upon reception of the service request, to perform the localized service (S1) for the fixed terminal (FT1) according to its geographical position (GP1).

## Description

The present invention relates to a method to enable provision of a localized multimedia service according to the preamble of claim 1 and to the preamble of claim 5; and to a telecommunication device according to the preamble of claim 8 and to a server according to the preamble of claim 11 which realizes, respectively, such a method; and to a multimedia telecommunication network that comprises such a telecommunication device or such a server according to the preamble of claim 12.

Such a method, telecommunication device, server and multimedia telecommunication network are already known in the art, e.g. from the European Patent Application with the title "*A method to provide a service, a service provider realizing such a method and a universal personal telecommunication network including such a service provider" and that is published at 5 January, 2000 with the publication number 0969645.*

Indeed, herein a method to provide a service to a user in a universal personal telecommunication network is described. The object of that method is to provide a service to a user that offers more to this user as only the services of a home service provider. Therefore, a virtual visited environment is defined that is similar to a virtual home environment but which is identified by the user itself and, a so-called, offered service provider. Such an offered service provider offers a set of services to the user. Offered services are for example localized multimedia services such as hotel information, restaurant information, roadmap information, ... .

The above mentioned application enables, due to the virtual visited environment that e.g. the results of such localized services are dependent on the mobile terminal's position within the telecommunication network. Indeed, the services that are offered to the user, located at its home area or located at a visited area, are the services of its home service provider offered by its home service provider via, respectively, a sub-network of its home area or via a sub-network of the visited area. Due to the virtual visited environment of this referred application, a user is enabled to accept a service of a service provider which is associated to anyone of its own home area (home service provider), the visited area or a intermediate or neighboring area.

According to a possible implementation of the referred application that describes a situation wherein a roaming user accepts a localized service that is offered by the foreign service provider of the network that he visits, the operator of this foreign network provides the localized service according to the geographical position of his network. For example, an operator in France provides, upon request of the mobile user hotel information, of France.

Furthermore, in the event when the user desires to use a localized service concerning a more detailed geographical position of its mobile terminal, the service application server of the multimedia network might retrieve from the home location register HLR of the mobile network, the cell identification of the mobile cell via which the mobile user gets access to the network. With this more accurate geographical position information of the user, the service application service is enabled to provide to a user e.g. hotel information of the area in the city that is covered according to the cell identification of the mobile network.

Furthermore, in the event when a user desires to use a localized service concerning accurate geographical position information, the mobile terminal of the user determines automatically e.g. with a Global Positioning System GPS that is integrated in the mobile terminal, its geographical position and comprises this position information into a service request towards a service application server of a multimedia network. This multimedia network might be associated to its home network or to the visited network, as long as the localized service that is related to a detailed geographical position of the mobile terminal is supported by the network. In this way, the roaming user might request from its hotel with its mobile terminal the service of a list of the closest restaurants in the same street of its hotel. The service request and the result are provided to the user without the user having to know by itself the coordinates of its geographical position. It is all realized automatically.

In this way, a prior art method to enable provision of a localized service to a terminal in a multimedia telecommunication network by a server, whereby the localized multimedia service is related to a geographical position of the terminal comprises a step of determining a geographical position of the terminal and a step of generating and transmitting by the terminal to the server a service request that comprises a terminal reference and a service reference.

However, in the event when the mobile user forgot its mobile terminal or its mobile terminal is damaged, the roaming user can not take advantage of the offered localized services with its mobile terminal. The roaming user might relay on the available fixed terminal in its hotel room.

However, the fixed network is not adapted to provide, automatically, localized services. No information such as the above-mentioned cell identification, via which the terminal gets access to the bearer network, is available in order to be used by a multimedia network.

Furthermore, a fixed terminal doesn't usually comprise a Global Positioning System since it is a fixed terminal by definition.

Hereby the localized services that are being developed for the mobile terminals can not be re-used for fixed terminals.

Nevertheless, such services could be useful, even for fixed terminals. Indeed, according to the above example, the user with its broken mobile terminal, would be helped when he could just pick up the fixed terminal in its hotel room for requesting, automatically, the nearest restaurant in the same street as the hotel.

An object of the present invention is to provide a method that enables provision of a localized multimedia service to a terminal, in a multimedia telecommunication network, by a server, whereby the service is related to a geographical position of the terminal, such as the above known methods but which one is suited for a fixed terminal.

This object is achieved by the method to enable provision of a localized multimedia service of claim 1 and of claim 5; and to the telecommunication device of claim 8 and to the server of claim 11 which realizes, respectively, such a method; and to the multimedia telecommunication network, that comprises such a telecommunication device or such a server, according to claim 12.

Indeed, by comprising in the method according to the present invention that is realized by the telecommunication device, the steps of:
- storing, by a storing means of the telecommunication device, position information regarding the geographical position into a geographical position database; and
- retrieving the position information from the geographical position database by a retrieving means of the telecommunication device; and
- comprising the position information of the geographical position into the service request by an inserting means the server is enabled, upon reception of the service request, to perform the localized service for the terminal according to the geographical position. This is described in claim 1.

A first implementation of this method is that the fixed terminal itself executes the method. This implies that the telecommunication device is comprised in the fixed terminal. The geographical position database is in this way a decentralized database that is decentralized over a plurality of terminals that comprises at least the fixed terminal. This is described in claim 2 and claim 9.

A second implementation of this method is that the steps of storing the position information, retrieving the position information and comprising the position information into the service request, are executed by a network element that is coupled between the terminal and the server. The step of storing the position information is realized by storing a relation between the position information and the terminal reference in the geographical position database. The step of retrieving the position information, upon interception by the network element of the service request is realized by retrieving the position information from the geographical position database according to the terminal reference of the service request and the stored relation. After realizing the step of comprising the position information into the service request, the service request is further forwarded to the server. This is described in claim 3 and claim 10.

Such a network element could be implemented by an access gateway. An access gateway is enabled to look into a service request of one of its terminals and is enabled to further forward such a service request to the service application server. This is described in claim 4.

Furthermore, by comprising in the method according to the present invention being realized by the server, the following steps of:
- storing position information regarding the geographical position into a geographical position database; and
- retrieving by retrieving means of the server upon reception of the service request, the position information from the geographical position database according to the terminal reference of the received service request,
the server is enabled to perform with its executing means the localized service for the terminal according to the geographical position. This is described in claim 5 that is realized by claim 11.

Since a fixed terminal is not to be moved on a regular base, the geographical position of the terminal might be determined according to e.g. an off-line mechanism and can be stored for a rather semi-permanent period in the geographical database. This is described in claim 6. In this way, an accurate geographical position of the fixed terminal needs to be determined. This can be realized by e.g. just looking to a geographical map or by e.g. using a Global Positioning System. According to the above mentioned implementation with the fixed terminal as telecommunication device that enables the provision of the localized multimedia service, a user might just store these determined geographical position with the aid of a small program in its fixed terminal. According to the hotel example, the installer of the fixed telephone equipment might execute some instruction at installation time whereby the position information regarding the accurate geographical position of each fixed terminal is pre-stored in a small part of the decentralized database. At the other hand, according to the implementation of the network element, the installer might deliver the position information of each fixed terminal to the operator, if it is not the same company, in order to be stored in a geographical database of the operator.

It has to be remarked that the geographical database is not necessarily comprised in the telecommunication device of the present invention itself. The same remark applies for a service application server according to the present invention. Indeed, a separate memory device might implement the geographical position database. The aim is that the device of the present invention is comprises means to retrieve the position information from this geographical database.

A commonly used protocol to set up a call within a packet-based environment is the Session Initiation Protocol SIP. This SIP protocol describes how with one of the known SIP messages a call request might initiated. Such a SIP message might be used to set up a service request. This is described in claim 7.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

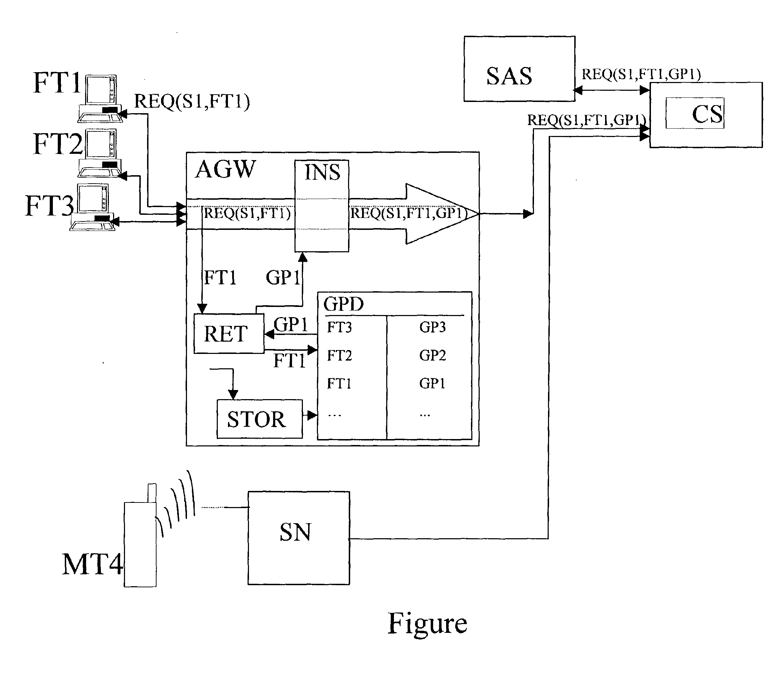

The above and other objects and features of the invention will become more apparent and the invention itself will be best understood by referring to the following description of an embodiment taken in conjunction with the accompanying drawings wherein the Figure a multimedia telecommunication network that includes a telecommunication device according to the present invention represents.

The working of the device according to the present invention in accordance with its telecommunication environment is shown and will be explained by means of a functional description of the different blocks shown therein. Based on this description, the practical implementation of the blocks will be obvious to a person skilled in the art and will therefor not be described in details. In addition, the principle working of the method to enable provision of a localized multimedia service to a terminal will be described in further detail.

Referring to the Figure a multimedia telecommunication network in accordance with a mobile telecommunication bearer network and with a fixed telecommunication bearer network is shown. The figure shows three fixed terminals FT1, FT2 and FT3; one mobile terminal MT4; an access gateway AGW; a support node SN; a call server CS and a service application server SAS.

Presume that both bearer networks are Internet Protocol packet networks. The mobile network is a Generic Packet Radio System network GPRS that is coupled to the multimedia telecommunication network. In this way, a support node SN of the GPRS network is coupled to a call server CS of the multimedia telecommunication network. The mobile terminal MT4 gets access to the mobile network via other mobile network elements (not shown) and via the support node SN i.e. the mobile terminal MT4 is coupled via an air interface and a line interface to the support node SN and the voice over internet packets from a call of the mobile terminal MT4 are transported via the support node SN towards the destination of the call.

In an identical way is the fixed Internet Protocol IP network coupled to the multimedia telecommunication network. This means that an access gateway AGW of the fixed bearer network is coupled to the call server CS of the multimedia telecommunication network. The fixed multimedia terminals FT1, FT2, and FT3 are getting access to the fixed network via the access gateway AGW i.e. they are coupled to the access gateway AGW.

The fixed network recognizes each fixed terminal according to a terminal reference. In this way the fixed network does recognize the fixed terminal FT3 according to the terminal reference FT3.

Within the multimedia telecommunication network, a service application server SAS is coupled to the call server CS. The service application server SAS is enabled to provide different kinds of multimedia services to as well mobile terminals as fixed terminals. One set of the available services is the set of services that are related to the geographical position of the terminal e.g. service S1. The present invention enables provision of such a localized multimedia service e.g. S1 to a fixed terminal e.g. FT1.

It is preferred to describe an embodiment wherein the telecommunication device according to the present invention is comprised in a network element i.e. the access gateway AGW.

A user of the fixed terminal FT1 who desires to take advantage of the available set of services selects one of these services and instructs thereby its terminal FT1 to generate and to transmit a service request. This service request REQ(S1,FT1)) comprises the terminal reference e.g. FT1 and the service reference e.g. S1 and is transmitted towards the service application server SAS via the access gateway AGW. For this embodiment it is preferred to implement the Session Initiation Protocol SIP, whereby the service request is implemented with an Session Initiation Protocol Request message SIP request.

Since the telecommunication device according to the present invention is comprised in the access gateway AGW, the access gateway AGW comprises thereby a retriever RET, a database-controller STOR, a geographical position database GPD and an insert-controller INS.

It has to be remarked here that the geographical position database GPD is not necessarily comprised in the access gateway but might as well be comprised in a neighboring network element. For reasons of efficiency, it is however to comprise the GPD database into the access gateway itself.

The database-controller STOR is coupled between a control input of the access gateway AGW and the geographical position database GPD. The retriever RET is coupled between a data flow input of the access gateway AGW and the geographical position database GPD and is furthermore coupled to the insert-controller INS. The data-flow input of the access gateway AGW is on its turn coupled to the fixed terminals FT1, FT2 and FT3. The insert-controller INS is coupled between the data-flow input of the access gateway AGW and a data-flow output of the access gateway AGW that on its turn is coupled to the call server CS.

The database-controller STOR is comprised to store predetermined position information regarding the geographical position into the geographical position database GPD. Therefore the operator of the fixed network receives the position information from the installer of the fixed terminals FT1, FT2 and FT3. The installer of the fixed terminals which desires to use the method to provide a localized multimedia service to its fixed terminals, predetermines an accurate geographical position for each one of its terminals. In this way, the geographical position is determined for the fixed terminal FT1 whereby the position information GP1 regarding this geographical position is provided to the operator. The operator stores this position information GP1 by means of the database-controller STOR into the GPD database. It has to be remarked that this latter action might be performed upon direct access to the gateway but might as well be performed according to remote control. In a similar way is also GP2 for FT2 and GP3 for FT3 stored into the geographical position database GPD. The geographical database GPD stores a relation e.g. (FT1;GP1) between the received position information GP1 and the terminal reference FT1 of the terminal that is located on the geographical position according to the position information.

The retriever RET is comprised to retrieve position information e.g. GP1 from the geographical position database GPD. The position information GP1 is retrieved according to a received terminal reference e.g. FT1. The terminal reference is received upon interception of a service request e.g. REQ(S1, FT1). The access gateway AGW is enabled to look into the service request message REQ(S1, FT1) and extracts hereof the reference of the terminal FT1 that initiated the message i.e. that desires to use the localized service. This terminal reference FT1 is looked-up in the GPD database and the associated relation provides the position information GP1 of the terminal with the terminal reference FT1.

The insert-controller INS is comprised to insert position information e.g. FT1 that is retrieved by the retriever RET into an intercepted service request. The service request becomes e.g. REQ(S1, FT1, GP1) and is further forwarded to its destination i.e. the service application server SAS.

The following paragraph describes the consecutive steps that are executed in the event when the fixed terminal FT1 desires to take advantage of the method according to the present invention i.e. the method to enable provision of a localized multimedia service.

Presume that the geographical position of the fixed terminal FT1 is pre-determined by means of a stand-alone Global Position System. The accurate geographical coordinates are provided to the network operator of the access gateway AGW to which the fixed terminal FT1 gets access to the fixed network. This position information is called FT1 and is stored via the database-controller STOR into the geographical database GPD by means of a stored relation between the terminal reference FT1 and this position information GP1.

Presume that the user of the fixed terminal FT1 desires to use an offered service of the service application server SAS. The desired service is called S1. The user selects this service S1 from a set of pre-installed options on the fixed terminal FT1. Hereby, a service request REQ is generated by the fixed terminal FT1. The service request REQ(S1,FT1) comprises the terminal reference FT1 and the service reference S1. The service request REQ(S1,FT1) is transmitted by the terminal FT1 towards the service application server SAS.

The access gateway AGW intercepts the SIP message. Since the access gateway recognizes the SIP message as a service request REQ(S1,FT1) it extracts hereof the terminal reference FT1 and provides this terminal reference to the retriever RET. The retriever RET retrieves the position information from the geographical database GPD according to the received terminal reference FT1 and the stored relation between the terminal reference FT1 and the position information. The retrieved position information is GP1.

This position information GP1 is provided to the insert-controller INS. The insert-controller INS inserts the position information into the service request and generates hereby an adapted service request REQ(S1,FT1, GP1). This adapted service request REQ(S1, FT1, GP1) is further forwarded to its destination i.e. the service application server SAS.

Upon reception of the service request REQ(S1,FT1,GP1) by the service application server SAS, it is enabled to perform the desired localized service S1 for the fixed terminal FT1 according to its geographical position GP1.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to enable provision of a localized multimedia service (S1) to a terminal (FT1) in a multimedia telecommunication network by a server (SAS), said localized multimedia service (S1) being related to a geographical position (GP1) of said terminal (FT1), said method comprises the steps of :
- determining said geographical position (GP1) of said terminal (FT1); and
- generating and transmitting by said terminal (FT1) to said server (SAS) a service request (REQ(S1,FT1)) comprising a terminal reference (FT1) and a service reference (S1), **characterized in that** said terminal (FT1) is a fixed terminal and that said method further comprises the steps of
- storing position information (GP1) regarding said geographical position (GP1) into a geographical position database (GPD); and
- retrieving said position information (GP1) from said geographical position database (GPD); and
- comprising said position information (GP1) into said service request (REQ(S1, FT1, GP1)) in order to thereby enable said server (SAS), upon reception of said service request, to perform said localized service (S1) for said terminal (FT1) according to said geographical position (GP1).

2. The method to provide a localized multimedia service according to claiml, **characterized by** executing said steps of storing said position information (GP1), retrieving said position information (GP1) and comprising said position information (GP1) into said service request (REQ(S1, FT1, GP1)) by said terminal (FT1).

3. The method to provide a localized multimedia service according to claim 1, **characterized by** executing
said steps of storing said position information (GP1), retrieving said position information (GP1) and comprising said position information (GP1) into said service request (REQ(S1, FT1, GP1)) by a network element (AGW), being coupled between said terminal (FT1) and said server (SAS), and by
- realizing said step of storing said position information (GP1) by storing a relation (FT1;GP1) between said position information (GP1) and said terminal reference (FT1) in said geographical position database (GPD); and
- realizing said step of retrieving said position information (GP1), upon interception by said network element (AGW) of said service request (REQ(S1,FT1)), by retrieving said position information (GP1) from said geographical position database (GPD) according to said terminal reference (FT1) of said service request (REQ(S1,FT1)) and said relation (FT1;GP1); and
- after realizing said step of comprising said position information (GP1) into said service request (REQ(S1, FT1, GP1), further forwarding it to said server (SAS).

4. The method to provide a localized multimedia service according to claim 3, **characterized in that** said network element (AGW) is a gateway.

5. A method to enable provision of a localized multimedia service (S1) to a terminal (FT1) by a server (SAS), said localized multimedia service (S1) being related to a geographical position (GP1) of said terminal (FT1), said method comprises the steps of:
- determining said geographical position (GP1) of said terminal (FT1); and
- generating and transmitting by said terminal (FT1) to said server (SAS) a service request (REQ(S1,FT1)) comprising a terminal reference (FT1) and a service reference (S1), **characterized in that** said terminal (FT1) is a fixed terminal and that said method further comprises the steps of
- storing position information (GP1) regarding said geographical position (GP1) into a geographical position database (GPD); and
- retrieving by said server (SAS), upon reception of said service request (REQ(S1, FT1)), said position information (GP1) from said geographical position database (GPD) according to said terminal reference (FT1) of said service request (REQ(FT1, S1)), and thereby enabling said server (SAS) to perform said localized service (S1) for said terminal (FT1) according to said geographical position (GP1).

6. The method to provide a localized multimedia service according to anyone of claim 1 to claim 5, **characterized in that** said step of determining a geographical position (GP1) of said terminal (FT1) being realized according to an off-line mechanism prior to said transmission of said service request (REQ(S1, FT1)).

7. The method to provide a localized multimedia service according to anyone of claim 1 to claim 6, **characterized that** said service request being implemented by a session initiation protocol message (SIP).

8. A telecommunication device to enable provision of a localized multimedia service to a terminal (FT1) in a multimedia telecommunication network by a server (SAS), said localized multimedia service (S1) being related to a geographical position of said terminal (FT1), **characterized in that** said terminal is a fixed terminal (FT1) and that said telecommunication device comprises :
- storing means (STOR) being enabled to store predetermined position information (GP1) regarding said geographical position into a geographical position database (GPD); and
- retrieving means (RET) being enabled to retrieve said position information (GP1) from said geographical position database (GPD); and
- inserting means (INS) enabled to comprise said position information (GP1) into a service request (REQ(S1, FT1, GP1)) of said terminal (FT1), that comprises a terminal reference (FT1) and a service reference (S1), and to forward said service request (REQ(S1, FT1, GP1)) to said server (SAS) in order to enable said server (SAS) to perform said localized service (S1) for said terminal (FT1) according to said geographical position (GP1).

9. The telecommunication device according to claim 8, **characterized in that** said telecommunication device is comprised in said terminal (FT1) whereby said geographical position database (GPD) is a decentralized database (GP1; GP2; ....; GPn) being decentralized over a plurality of terminals (FT1; FT2; ..., FTn) comprising said terminal (FT1) and being similar to said terminal (FT1).

10. The telecommunication device according to claim 8, **characterized in that** said telecommunication device is comprised in a network element (AGW) of said multimedia telecommunication network and
that said geographical database (GPD) is enabled to store a relation (FT1; GP1) between said position information (GP1) and said terminal reference (FT1); and
that said retrieving means (RET) is enabled to retrieve said position information (GP1), upon interception by said network element (AGW) of said service request (REQ) being transmitted by said terminal (FT1), according to said terminal reference (FT1) of said service request (REQ(S1,FT1)) and said relation (FT1;GP1); and
that said inserting means (INS) is further enabled to forward said service request (REQ(S1, FT1, GP1)) towards said server (SAS).

11. A server (SAS) to provide a localized multimedia service (S1) to a terminal (FT1) in a multimedia telecommunication network upon reception of a service request (REQ(S1, FT1)) from said terminal (FT1), said service request (REQ(FT1, S1)) comprises a terminal reference (FT1) and a service reference (S1), said localized multimedia service being related to a predetermined geographical position (GP1) of said terminal (FT1), **characterized in that** said terminal (FT1) is a fixed terminal (FT1) whereby said service (S1) is provided by said server (SAS) to a fixed terminal, said server (SAS) comprises retrieving means to retrieve position information (GP1) from a geographical position database (GPD) according to said terminal reference (FT1) of said received service request (REQ(S1, FT1), said position information (GP1) being related to said predetermined geographical position (GP1) of said terminal (FT1) and being stored into said geographical position database (GPD) in relation (FT1; GP1) to said terminal reference (FT1), and said server (SAS) further comprises executing means to perform said localized service (S1) for said terminal (FT1) according to said retrieved geographical position (GP1).

12. A multimedia telecommunication network **characterized in that** said multimedia telecommunication network comprises anyone of a telecommunication device (DEV) according to anyone of claim 8 to claim 10, and a server (SAS) according to claim 11.
